# EUROPEAN PATENT SPECIFICATION

(11) **EP 1 639 503 B1**
(45) Date of publication and mention of the grant of the patent: **05.09.2012**
(21) Application number: 04739372.3
(22) Date of filing: 26.05.2004
(51) Int. Cl.: G06F 17/30

(54) **A DATA PROCESSING METHOD AND SYSTEM**
DATENVERARBEITUNGSVERFAHREN UND SYSTEM
PROCEDE ET SYSTEME DE TRAITEMENT DE DONNEES

(30) Priority: 28.05.2003 EP 03012032
(43) Date of publication of application: 29.03.2006
(73) Proprietor: SAP AG, 69190 Walldorf (DE)
(72) Inventor: SCHMITT, Winfried, 69190 Walldorf (DE); HELMUT, Hofmann, 69207 Sandhausen (DE); BALZAR, Andreas, 74821 Mosbach (DE)
(74) Representative: Richardt Patentanwälte GbR
(86) International application number: PCT/EP2004/005672
(87) International publication number: WO 2004/107206

(56) References cited:
- WO-A-02/080026
- US-A1- 2002 032 676
- US-B1- 6 341 277

## Description

### Field of the invention.

The present invention relates to the field of data processing, and more particularly to data models and query processing.

### Background and prior art

Data models such as entity-relationship-models are commonly used for database design. A data model is a conceptual description of data objects, i.e. entity types, their attributes, and the relationships between them. There are different types of data models, depending on the data structures to be defined such as relational data model.

ACM Transactions on Database Systems, Volume 1, No. 1, March 1976, Peter Pin-Shan Chen "The Entity-Relationship Model-Toward a Unified View of Data", pages 9-36 shows a data model. This model incorporates some of the important semantic information about the real world serving as a tool for database design.

From U.S. Pat. No. 4,479,196 to Ferrer et al. a diagrammatic technique to represent an entity relationship model is known for usage in a database system. This technique is directed to represent databases in a form which is readily processed and efficiently utilized by digital computers.

Large applications can be based on very complex data models. Searches are usually performed by using structured query language (SQL) expressions. For more information on the use of structured query language see "A Guide to SQL", Philip J. Pratt, Boyd & Fraser Pub Co, February 1995, ISBN: 0877095205. Search expressions may be quite complex and their results may be relied upon to produce appropriate reports within the database application.

In US Patent Application no. 2002/0032676 A1 (Reiner et al.) a method and apparatus for data access in multiprocessor digital data processing systems is disclosed. Database queries are intercepted prior to processing by a database management system (DBMS). The system decomposes at least selected queries to generate multiple subqueries for application, in parallel to the DBMS. Responses by the DBMS to the subqueries are assembled by the system to generate a final response.

The data of a data model can be stored on a single data processing system or it can be stored on various distributed internal and / or external data sources. A disadvantage of distributed data processing relying on various kinds of internal and / or external data sources is that each individual data source may require a dedicated interface. This makes prior art distributed data processing systems difficult and costly to implement. A further disadvantage is a lack of flexibility and high maintenance costs.

### Summary of the invention

The present invention provides for a data processing method which relies on a data model having a set of entity types and a set of attributes for each entity type. The data model can be adapted to a customers needs by customization. The customization is stored by means of customizing data which indicates the internal and / or external data sources for the attributes and the data structures provided by these internal and / or external data sources.

When a query is processed it is first determined whether the query can be performed by using a single data source. If such a data source is not available a set of data sources is determined. The combination of the data sources contains the information requested by the query. For processing the query it is split up into a number of sub-queries and the results of the sub-queries are combined to provide the query result.

It is a particular advantage of the present invention that this approach is generic and can be used by various applications. Further, it provides flexibility as far as the customization and the data sources are concerned.

### Brief description of the drawings

In the following an embodiment of the invention will be described in greater detail by making reference to the drawings in which:
- Figure 1: is a block diagram of the embodiment of a data processing system of the invention,
- Figure 2: is a block diagram of the embodiment of a data processing system of the present invention,
- Figure 3: is illustrative on the embodiment of a method of the present invention.

### Detailed description

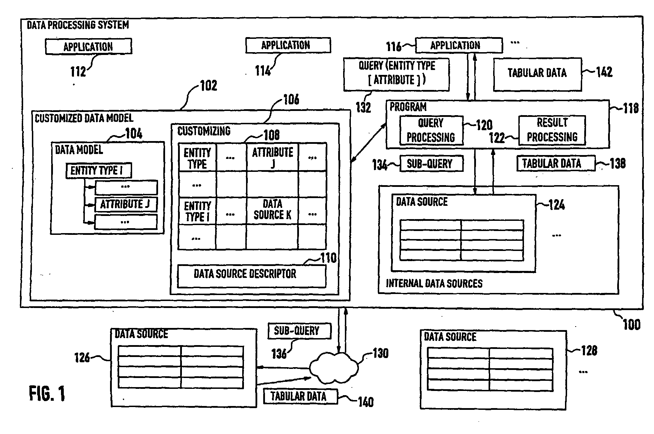

Figure 1 shows data processing system 100 having a customized data model 102. Customized data model 102 is based on generic data model 104 which encompasses a number of entity types i.e. entity type 1, entity type 2, ... entity type I, ... Each one of the entity types has a set of attributes. For example entity i has attribute 1, attribute 2, ... attribute j, ...

Customized data model 102 has customizing data 106. Customizing data 106 has table 108 for identification of data sources for attributes. In the example considered here table 108 has one row for each entity type. Each data field of the role indicates a data source for one of the attributes of the particular entity type. For example row i of table 108 contains entries for entity i , i.e. the data sources for the attributes of entity type i. As indicated in Figure 1 data source k is the data source for attribute j of entity type i.

Further customizing data 106 has data source descriptor 110 which describes the data structures being provided by the data sources of table 108.

Data processing system 100 has a number of application programs 112, 114, 116... which are used for various data processing purposes of the data contained in the customized data model 102. Program 118 serves as an interface between the application programs 112, 114, 116, ... and customized data model 102. Program 116 has query processing module 120 and result processing module 122.

Data processing system 100 has a number of internal data sources, i.e. data source 124 and is coupled to external data sources 126, 128, ... via computer network 130, such as the Internet.

In operation one of the application programs, such as application program 116, sends query 132 to program 118. Query 132 specifies at least one entity type and one attribute of the specified entity type of data model 104. For example query 132 is issued by application 116 in order to obtain attribute data for attribute j for entity type i .

Query 132 is processed by query processing module 120. Query processing module 120 determines the data sources and their data structures which are available for providing the requested data from customizing data 106. If there is a single database which can provide the requested data program 118 forwards query 132 to that database.

If such a database is not available query processing module 120 determines a set of data sources which in combination contain the information requested by query 132. In this case query processing module 120 generates a sub-query for each one of the data sources which in combination contain the requested data.

For example internal data source 124 and external data source 126 have been identified to contain in combination the information as requested by query 132. In this instance sub-query 134 and sub-query 136 are generated. Sub-query 134 is entered into internal data source 124 which in response provides tabular data 138. Likewise sub-query 136 is sent over computer network 130 to data source 126, such as by means of a HTTP request. In response data source 126 provides tabular data 140 which is transmitted over computer network 130 to data processing system 100 i.e. to program 118.

Result processing module 122 combines the information contained in tabular data 138 and 140 in order to provide the tabular data 142 containing the information requested by query 132.

It is a particular advantage of data processing system 100, that program 118 can be used as an interface for various application programs 112, 114, 116, ... These application programs do not need to have knowledge as to the location of data sources for attribute data and the data structures provided by these data sources. This information Is encapsulated in customized data model 102 and is relied upon by program 118 for query processing. This generic approach enables an efficient administration of data processing system 100 as well as an efficient change management. For example data sources can be added or replaced by making corresponding entries into table 108 and into data source descriptor 100.

As an alternative to fixed assignments of data sources to attributes a rule base can be utilised. In the rule base a set of rules specifies the assignments of attributes of entity types to data sources.

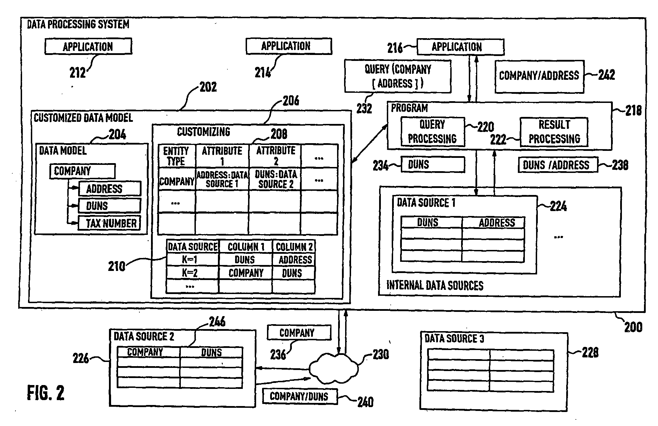

Figure 2 also shows the embodiment. Elements of Figure 2 which correspond to elements of Figure 1 are designated by like reference numerals having added 100.

In Figure 2 generic data model 204 has an entity type 'company' containing company related data. These data are attributive data 'address', Dun and Bradstreet Number 'DUNS', and 'tax number'.

Customizing data 206 has a table 208 for identifying of the data sources for the attributive data of entity type 'company' and other entity types which are contained in data model 204 but not shown in Figure 1 for convenience of explanation.

Data source k = 1 i.e. internal data source 224, is entered in table 208 as the data source for attribute 1, i.e. attribute 'address' of entity type 'company'. Data source k = 2, i.e. external data source 226, is entered in table 208 as the data source for attribute 2, i.e. DUNS, for entity type 'company'.

Data source descriptor 210 has an entry for each one of the data sources and describes the data structure of each data source. In the example considered here data source k =1 has a column for DUNS and a column for the address of the company with the DUNS. Data source k = 2 has one column for the company names and another column of the DUNSs being related to the company names. The corresponding database tables 244 of data source 224 (k = 1) and database table 246 of data source 226 (k = 2) are shown in Figure 2.

Application program 216 issues query 232. Query 232 is a request for address data of all companies. When query 232 is received by program 218 query processing module 220 checks customizing data 206 for the availability of a data source containing the addresses for all companies. As such a data structure is not available in accordance with data source descriptor 210 query processing module 220 needs to determine a set of data sources which in combination contain the information requested in query 232. In the example considered here this set of data sources consists of data sources k =1 and k=2.

Next query processing module 220 generates sub-queries 234 and 236 for each one of the data sources of the identified set of data sources.

Sub-query 236 is directed towards obtaining the DUNS numbers for all companies. The corresponding tabular data 240 is received from data source 226 via computer network 230. The DUNS numbers contained in tabular data 240 are used by query processing module 220 to generate query 234 requesting the addresses of the companies having the DUNS numbers received my means of tabular data 240. In response data source 224 provides tabular data 238 containing the addresses of the companies having the DUNS numbers of query 234.

Alternatively query 234 is directed towards obtaining all addresses being associated to DUNS numbers in data source 224.

Result processing module 222 combines tabular data 240 and 238 in order to provide tabular data 242 relating company names to company addresses. This combination is performed by using the DUNS numbers which unequivocally identify the companies as a link between tabular data 240 and tabular data 238.

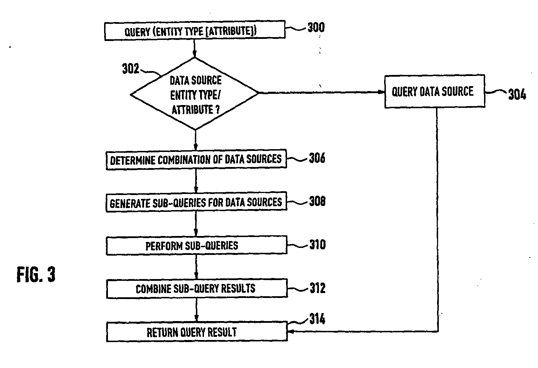

Figure 3 is a corresponding flow chart. In step 300 a query is entered. The query specifies at least one attribute for at least one entity type. In other words the query is directed towards obtaining certain attribute data for a certain entity type as defined in the customized data model.

In step 302 it is determined whether there is a single data source which is able to provide the entity type / attribute information. If this is the case the query is forwarded to that data source and the query is performed in step 304.

If the contrary is the case a sub-set of the available set of data sources is determined in step 306 which in combination contain the information requested in the query. In step 308 sub-queries are generated for each data source of the sub-set. In step 310 the sub-queries are performed and the sub-query results are provided to the common interface program where the sub-query results are combined in step 312. This yields the query result which is returned to the requesting application program.

It is important to note that the same principles as described above for a query can also be used for writing of data. Further, the term 'attribute' as used herein can also encompass the entity type, i.e. the identifier of an entity type.

### List of Reference Numerals

- 100: data processing system
- 102: custom led data model
- 104: generic data model
- 106: customizing data
- 108: table
- 110: data source descriptor
- 112: application program
- 114: application program
- 116: application program
- 118: program
- 120: query processing module
- 122: result processing module
- 124: data source
- 126: data source
- 128: data source
- 130: computer network
- 132: query
- 134: sub-query
- 136: sub-query
- 138: tabular data
- 140: tabular data
- 142: tabular data
- 200: data processing system
- 202: custom led data model
- 204: generic data model
- 206: customizing data
- 208: table
- 210: data source descriptor
- 212: application program
- 214: application program
- 216: application program
- 218: program
- 220: query processing module
- 222: result processing module
- 224: data source
- 226: data source
- 228: data source
- 230: computer network
- 232: query
- 234: sub-query
- 236: sub-query
- 238: tabular data
- 240: tabular data
- 242: tabular data
- 244: database table
- 246: database table

## Claims

1. A data processing system (100) being coupled via a network to external data sources (126, 128), the data processing system comprising:
- a data model (104; 204) having a set of entity types (i) and a set of attributes (j) for each entity type of the set of entity types, the data of the data model being stored on distributed internal (124) and the external data sources,
- customizing data (106; 206) for the data model, the customizing data comprising a table (108; 208) indicative of a plurality of internal (124..., 224,...) and external (126, 128,...; 226, 228,..) data sources (k) for the attributes, the attributes being columns of database tables the customizing data comprising a data source descriptor table (110; 210) having an entry for each one of the data sources and describing the data structure of each data source,
- means (112, 114, 116,...; 212, 214, 216,...) for entering a query (132; 232) for obtaining of first attribute data for at least a first attribute of the set of attributes of one of the entity types,
- means (118; 218) for determining from the customizing data, if a single data source for obtaining of the first attribute data being related to the one of the entity types is available,
- means (118; 218) for determining, if such a single data source is not available, at least first and second ones of the internal and external data sources which in combination comprise the first attribute data being related to the one of the entity types,
- means (118; 218) for generating a sub- query (134, 136; 234, 236) for each one of the at least first and second one of the internal and external data sources, wherein the sub-query is generated using the data source descriptor table, whereby the first and second data sources are database tables XML files, web-services, method or function calls, EDI documents or SOAP objects , whereby a first one of the subqueries is generated to obtain first tabular data of the first attribute from the first one of the internal and external data sources and a second one of the sub-queries is generated to obtain second tabular data of a second attribute from the second one of the internal and external data sources, the second attribute being one of the set of attributes of the one entity type;
- means (118; 218) for combining of the results of the sub-queries to provide the query result (142; 242),
the means for combining of the results comprising a result processing module (122) for combining at least first and second tabular data (138,140) received in response to respective ones of the sub-queries from the at least first and second ones of the internal and external data sources into a single data table (142) to provide the query result in response to the query to an application program (116).

2. The data processing system of claim 1, one of the data structures being tabular data relating entity type data to attribute data of attributes of the set of attributes of the entity type or relating of second attribute data of a second attribute of the set of attributes to the first attribute data.

3. A data processing method being executed by a data processing system (100) coupled via a network to external data sources (126, 128), the data processing method comprising the steps of:
- providing a data model having a set of entity types and set of attributes for each entity type for the set of entity types, the data of the data model being stored on distributed internal and the external data sources,
- providing of customizing data for the data model, the customizing data comprising a table (108; 208) indicative of internal and external data sources for the attributes, the attributes being columns of database tables, and comprising a data source descriptor table (110; 210), having an entry for each one of the data sources and describing the data structure of each data source,
- entering a query for obtaining of attribute data for at least a first attribute of the set of attributes of one of the entity types,
- determining from the customizing data, if a single data source for the first attribute data of the one of the entity types is available,
- if such a single data source is not available, determining at least first and second ones of the internal and external data sources which in combination comprise the first attribute data of the one of the entity types, whereby the first and second data sources are database tables, XML files, web-services, method or function calls, EDI documents or SOAP objects whereby a first one of the sub-queries is generated to obtain first tabular data of the first attribute from the first one of the internal and external data sources and a second one of the sub-queries is generated to obtain second tabular data of a second attribute from the second one of the internal and external data sources, the second attribute being one of the set of attributes of the one entity type,
- generating a sub-query for each one of the at least first and second internal and external data sources, wherein the sub-query is generated using the data source descriptor table,
- combining the results of the sub-queries to provide a query result.

4. The method of claim 3, one of the data structures being tabular data relating entity type data to attribute data of attributes of the set of attributes of the entity type or relating of second attribute data of a second attribute of the set of attributes to the first attribute data.

5. A computer program product, in particular digital storage medium, being contained in a data processing system (100) coupled via a network to external data sources (126, 128), the computer program product comprising:
- a data model having a set of entity types and a set of attributes for each entity type of the set of entity types, the data of the data model being stored on distributed internal and the external data sources,
- customizing data for the data model, the customizing data comprising a table (108; 208) indicative of internal (124) and external (126, 128) data sources for the attributes, the attributes being columns of database tables, and comprising a data source descriptor table (110; 210), having an entry for each one of the data sources and describing the data structure of each data source,
- program means for performing the steps of:
a) entering a query for obtaining a first attribute data for at least a first attribute of the set of attributes of one of the entity types,
b) determining from the customizing data, if a single data source for the first attribute data of the one of the entity types is available,
c) if such a single data source is not available, determining at least first and second ones of the internal and external data sources which in combination comprise the first attribute data of the one of the entity types,
d) generating a sub-query for each one of the at least first and second ones of the internal and external data sources, wherein the sub-query is generated using the data source descriptor table, whereby the first and second data sources are database tables, XML files, web-services, method or function calls, EDI documents or SOAP objects whereby a first one of the sub-queries is generated to obtain first tabular data of the first attribute from the first one of the internal and external data sources and a second one of the sub-queries is generated to obtain second tabular data of a second attribute from the second one of the internal and external data sources, the second attribute being one of the set of attributes of the one entity type,
e) combining the results of the sub-queries to provide a query result.

6. The computer program product of claim 5, one of the data structures being tabular data relating entity type data to attribute data of attributes of the set of attributes of the entity type or relating of second attribute data of a second attribute of the set of attributes to the first attribute data.

## Patentansprüche

1. Ein Datenverarbeitungssystem (100), das über ein Netzwerk an externen Datenquellen (126, 128) gekoppelt ist, wobei das Datenverarbeitungssystem umfasst:
- Ein Datenmodell (104, 204) mit einem Satz von Objekttypen (i) und einem Satz von Attributen (j) für jeden Objekttyp des Satzes von Objekttypen, wobei die Daten des Datenmodells auf verteilten internen (124) und externen Datenquellen gespeichert sind,
- Konfigurationsdaten (106, 206) für das Datenmodell, wobei die Konfigurationsdaten eine Tabelle (108, 208) beinhalten, die eine Vielzahl von internen (124, ..., 224, ...) und externen (126, 128, ...; 226, 228, ..) Datenquellen (k) für die Attribute identifiziert, wobei die Attribute Spalten von Datenbanktabellen sind, wobei die Konfigurationsdaten eine Datenquellenbeschreibungstabelle (110; 210) enthalten, wobei die Datenquellenbeschreibungstabelle einen Eintrag für jede der Datenquellen enthält und die Datenstruktur jeder der Datenquellen beschreibt,
- Mittel (112, 114, 116, ..., 212, 214, 216, ...) zur Eingabe einer Anfrage (132, 232) zum Erhalten von ersten Attributdaten für zumindest ein erstes Attribut aus dem Satz von Attributen eines der Objekttypen,
- Mittel (118, 218) zur Bestimmung aus den Konfigurationsdaten, ob eine einzelne Datenquelle zum Erhalten der ersten Attributdaten, die mit dem einen der Objekttypen verknüpft sind, verfügbar ist,
- Mittel (118, 218) zur Bestimmung, falls eine solche einzelne Datenquelle nicht verfügbar ist, zumindest von ersten und zweiten der internen und externen Datenquellen, die in Kombination die ersten Attributdaten, die mit dem einen der Objekttypen verknüpft sind, enthalten,
- Mittel (118, 218) zum Erzeugen einer Teil-Anfrage (134, 136, 234, 236) für jede der mindestens ersten und zweiten der internen und externen Datenquellen, wobei die Teil-Anfrage mit Hilfe der Datenquellenbeschreibungstabelle generiert wird, wobei die ersten und zweiten Datenquellen Datenbanktabellen, XML-Dateien, Web-Services, Methoden- oder Funktionsaufrufe, EDI Dokumente, oder SOAP-Objekte sind, wobei eine erste der Teil-Anfragen generiert wird um erste tabellarische Daten des ersten Attributs von der ersten der internen und externen Datenquellen zu erhalten und wobei eine zweite der Teil-Anfragen generiert wird um zweite tabellarische Daten des zweiten Attributs von der zweiten der internen und externen Datenquellen zu erhalten, wobei das zweite Attribut eines aus dem Satz von Attributen des einen der Objekttypen ist;
- Mittel (118, 218) zum Kombinieren der Ergebnisse der Teil-Anfragen, um das Anfrage-Ergebnis bereitzustellen (142, 242),
wobei die Mittel zum Kombinieren der Ergebnisse ein Ergebnis-Verarbeitungsmodul (122) zum Kombinieren von zumindest ersten und zweiten tabellarischen Daten (138,140) in einer einzigen Datentabelle (142) beinhalten, wobei die ersten und zweiten tabellarischen Daten in Antwort auf entsprechende Teil-Anfragen aus den zumindest ersten und zweiten der internen und externen Datenquellen empfangen werden, um das Anfrage-Ergebnis in Antwort auf die Anfrage einem Anwendungsprogramm (116) bereitzustellen.

2. Datenverarbeitungssystem nach Anspruch 1, wobei eine der Datenstrukturen aus tabellarischen Daten besteht, die Objekttyp-Daten mit Attributdaten von Attributen des Satzes von Attributen des Objekttyps verknüpfen, oder die zweite Attributdaten eines zweiten Attributs des Satzes von Attributen mit den ersten Attributdaten verknüpfen.

3. Datenverarbeitungsverfahren, das von einem Datenverarbeitungssystem (100), das über ein Netzwerk an externe Datenquellen (126, 128) gekoppelt ist, ausgeführt wird, wobei das Verfahren die Schritte umfasst:
- Bereitstellung eines Datenmodells mit einem Satz von Objekttypen und einem Satz von Attributen für jeden Objekttyp des Satzes von Objekttypen, wobei die Daten des Datenmodells in verteilten internen und externen Datenquellen gespeichert sind,
- Bereitstellung von Konfigurationsdaten für das Datenmodell, wobei die Konfigurationsdaten eine Tabelle (108, 208) beinhalten, die interne und externe Datenquellen für die Attribute identifiziert, wobei die Attribute Spalten von Datenbanktabellen sind, wobei die Konfigurationsdaten eine Datenquellenbeschreibungstabelle (110; 210) enthalten, wobei die Datertquellenbeschreibungstabelle einen Eintrag für jede der Datenquellen enthält und die Datenstruktur jeder der Datenquellen beschreibt,
- Eingabe einer Anfrage zum Erhalten von Attributdaten für zumindest ein erstes Attribut aus dem Satz von Attributen eines der Objekttypen,
- Bestimmen aus den Konfigurationsdaten, ob eine einzelne Datenquelle zum Erhalten der ersten Attributdaten des einen der Objekttypen verfügbar ist,
- Wenn diese einzelne Datenquelle nicht verfügbar ist, Bestimmen zumindest von ersten und zweiten der internen und externen Datenquellen, die in Kombination die ersten Attributdaten des einen der Objekttypen enthalten, wobei die ersten und zweiten Datenquellen Datenbanktabellen, XML-Dateien, Web-Services, Methoden- oder Funktionsaufrufe, EDI Dokumente, oder SOAP-Objekte sind, wobei eine erste der Teil-Anfragen generiert wird um erste tabellarische Daten des ersten Attributs von der ersten der internen und externen Datenquellen zu erhalten, und wobei eine zweite der Teil-Anfragen generiert wird um zweite tabellarische Daten eines zweiten Attributs von der zweiten der internen und externen Datenquellen zu erhalten, wobei das zweite Attribut eines aus dem Satz von Attributen des einen Objekttyps ist,
- Erzeugen einer Teil-Anfrage für jede der zumindest ersten und zweiten internen und externen Datenquellen, wobei die Teil-Anfrage mit Hilfe der Datenquellenbeschreibungstabelle generiert wird,
- Kombination der Ergebnisse der Teil-Anfragen, um ein Anfrage Ergebnis bereitzustellen.

4. Verfahren nach Anspruch 3, wobei eine der Datenstrukturen aus tabellarischen Daten besteht, die Objekttyp-Daten mit Attributdaten von Attributen des Satzes von Attributen des Objekttyps verknüpfen, oder die zweite Attributdaten eines zweiten Attributs des Satzes von Attributen mit den ersten Attributdaten verknüpfen.

5. Computerprogrammprodukt, insbesondere ein digitales Speichermedium, das enthalten ist in einem Datenverarbeitungssystem (100) welches über ein Netzwerk an externe Datenquellen (126, 128) gekoppelt ist, wobei das Computerprogrammprodukt enthält:
- Ein Datenmodell mit einem Satz von Objekttypen und einem Satz von Attributen für jeden Objekttyp des Satzes von Objekttypen, wobei die Daten des Datenmodells in verteilten internen und externen Datenquellen gespeichert sind,
- Konfigurationsdaten für das Datenmodell, wobei die Konfigurationsdaten eine Tabelle (108, 208) beinhalten, die eine Vielzahl von internen (124) und externen (126, 128) Datenquellen für die Attribute identifiziert, wobei die Attribute Spalten von Datenbanktabellen sind, wobei die Konfigurationsdaten eine Datenquellenbeschreibungstabelle (110; 210) enthalten, wobei die Datertquellenbeschreibungstabelle einen Eintrag für jede der Datenquellen enthält und die Datenstruktur jeder der Datenquellen beschreibt,
- Programmmittel zum Ausführen der folgenden Schritte:
a) Eingabe einer Abfrage zum Erhalten erster Attributdaten für zumindest ein erstes Attribut aus dem Satz von Attributen eines der Objekttypen,
b) Bestimmen aus den Konfigurationsdaten, Konfigurationsdaten, ob eine einzelne Datenquellen für die ersten Attributdaten des einen der Objekttypen verfügbar ist,
c) wenn diese einzelne Datenquelle nicht verfügbar ist, Bestimmen zumindest von ersten und zweiten der internen und externen Datenquellen, die in Kombination die ersten Attributdaten des einen der Objekttypen enthalten,
d) Erzeugen einer Teil-Anfrage für jede einzelne der mindestens ersten und zweiten der internen und externen Datenquellen, wobei die Teil-Anfrage mit Hilfe der Datenquellenbeschreibungstabelle generiert wird, wobei die ersten und zweiten Datenquellen Datenbanktabellen, XML-Dateien, Web-Services, Methoden- oder Funktionsaufrufe, EDI Dokumente, oder SOAP-Objekte sind, wobei eine erste der Teil-Anfragen generiert wird um erste tabellarische Daten des ersten Attributs von der ersten der internen und externen Datenquellen zu erhalten, und wobei eine zweite der Teil-Anfragen generiert wird um zweite tabellarische Daten eines zweiten Attributs von der zweiten der internen und externen Datenquellen zu erhalten, wobei das zweite Attribut eines aus dem Satz von Attributen des einen Objekttyps ist,
e) Kombinieren der Ergebnisse der Teil-Anfragen, um ein Anfrage-Ergebnis bereitzustellen.

6. Computerprogrammprodukt nach Anspruch 5, wobei eine der Datenstrukturen aus tabellarischen Daten besteht, die Objekttyp-Daten mit Attributdaten von Attributen des Satzes von Attributen des Objekttyps verknüpfen, oder die zweite Attributdaten eines zweiten Attributs des Satzes von Attributen mit den ersten Attributdaten verknüpfen

## Revendications

1. Système de traitement de données (100) étant couplé via un réseau à des sources de données externes (126, 128), le système de traitement de données comprenant :
- un modèle de données (104 ; 204) ayant un ensemble de types d'entité (i) et un ensemble d'attributs (j) pour chaque type d'entité de l'ensemble de types d'entité, les données du modèle de données étant stockées sur des sources de données internes (124) et externes distribuées,
- des données de personnalisation (106 ; 206) pour le modèle de données, les données de personnalisation comprenant une table (108 ; 208) indicative d'une pluralité de sources de données (k) internes (124, ... ; 224, ...) et externes (126, 128, ... ; 226, 228, ...) pour les attributs, les attributs étant des colonnes de tables de bases de données, les données de personnalisation comprenant une table de description de source de données (110 ; 210) ayant une entrée pour chacune des sources de données et décrivant la structure de données de chaque source de données,
- des moyens (112, 114, 116, ... ; 212, 214, 216, ...) pour entrer une requête (132 ; 232) pour l'obtention de données de premier attribut d'au moins un premier attribut parmi l'ensemble d'attributs de l'un des types d'entité,
- des moyens (118 ; 218) pour déterminer à partir des données de personnalisation, si une source de données unique pour l'obtention des données de premier attribut étant associées à l'un des types d'entité est disponible,
- des moyens (118 ; 218) pour déterminer, si une telle source de données unique n'est pas disponible, au moins des première et seconde sources parmi les sources de données externes et internes qui, combinées, comprennent les données de premier attribut étant associées à l'un des types d'entité,
- des moyens (118 ; 218) pour générer une sous-requête (134, 136 ; 234, 236) pour chacune des au moins première et seconde sources parmi les sources de données internes et externes, dans lequel la sous-requête est générée en utilisant la table de description de source de données, moyennant quoi les première et seconde sources de données sont des tables de bases de données, des fichiers XML, des services web, des appels de méthodes ou de fonctions, des documents EDI, ou des objets SOAP, ce par quoi une première des sous-requêtes est générée pour obtenir des premières données tabulaires du premier attribut à partir de la première des sources de données internes et externes et une seconde des sous-requêtes est générée pour obtenir des secondes données tabulaires d'un second attribut à partir de la seconde des sources de données internes et externes, le second attribut étant l'un de l'ensemble d'attributs du type d'entité ;
- des moyens (118 ; 218) pour la combinaison des résultats des sous-requêtes pour fournir le résultat de requête (142 ; 242),
les moyens de combinaison des résultats comprenant un module de traitement de résultat (122) pour combiner au moins des premières et secondes données tabulaires (138, 140) reçues en réponse à des sous-requêtes respectives parmi les sous-requêtes provenant des au moins première et seconde sources parmi les sources de données internes et externes dans une table de données unique (142) pour fournir à un programme d'application (116) le résultat de requête en réponse à la requête.

2. Système de traitement de données selon la revendication 1, l'une des structures de données étant des données tabulaires liant des données de type d'entité à des données d'attribut d'attributs de l'ensemble d'attributs du type d'entité ou liant des secondes données d'attribut d'un second attribut de l'ensemble d'attributs aux données de premier attribut.

3. Procédé de traitement de données étant exécuté par un système de traitement de données (100) couplé via un réseau à des sources de données externes (126, 128), le procédé de traitement de données comprenant les étapes de :
- fournir un modèle de données ayant un ensemble de types d'entité et un ensemble d'attributs pour chaque type d'entité pour l'ensemble de types d'entité, les données du modèle de données étant stockées sur des sources de données internes et externes distribuées,
- fournir des données de personnalisation pour le modèle de données, les données de personnalisation comprenant une table (108 ; 208) indicative de sources de données internes et externes pour les attributs, les attributs étant des colonnes de tables de bases de données, et comprenant une table de description de source de données (110 ; 210), ayant une entrée pour chacune des sources de données et décrivant la structure de données de chaque source de données,
- entrer une requête pour l'obtention de données d'attribut pour au moins un premier attribut de l'ensemble d'attributs de l'un des types d'entité,
- déterminer à partir des données de personnalisation, si une source de données unique pour les données de premier attribut de l'un des types d'entité est disponible,
- si une telle source de données unique n'est pas disponible, déterminer au moins des première et seconde sources parmi les sources de données internes et externes qui, combinées, comprennent les données de premier attribut de l'un des types d'entité, moyennant quoi les première et seconde sources de données sont des tables de bases de données, des fichiers XML, des services web, des appels de méthodes ou de fonctions, des documents EDI, ou des objets SOAP, ce par quoi une première des sous-requêtes est générée pour obtenir des premières données tabulaires du premier attribut à partir de la première des sources de données internes et externes et une seconde des sous-requêtes est générée pour obtenir des secondes données tabulaires d'un second attribut à partir de la seconde des sources de données internes et externes, le second attribut étant l'un de l'ensemble d'attributs du type d'entité,
- générer une sous-requête pour chacune des au moins première et seconde sources de données internes et externes, dans lequel la sous-requête est générée en utilisant la table de description de source de données,
- combiner les résultats des sous-requêtes pour fournir un résultat de requête.

4. Procédé selon la revendication 3, l'une des structures de données étant des données tabulaires liant des données de type d'entité à des données d'attribut d'attributs de l'ensemble d'attributs du type d'entité ou liant des secondes données d'attribut d'un second attribut de l'ensemble d'attributs aux données de premier attribut.

5. Produit de programme informatique, en particulier un média de stockage numérique, étant contenu dans un système de traitement de données (100) couplé via un réseau à des sources de données externes (126, 128), le produit de programme informatique comprenant :
- un modèle de données ayant un ensemble de types d'entité et un ensemble d'attributs pour chaque type d'entité de l'ensemble de types d'entité, les données du modèle de données étant stockées sur les sources de données internes et externes distribuées,
- des données de personnalisation pour le modèle de données, les données de personnalisation comprenant une table (108 ; 208) indicative de sources de données internes (124) et externes (126, 128) pour les attributs, les attributs étant des colonnes de tables de bases de données, et comprenant une table de description de source de données (110 ; 210), ayant une entrée pour chacune des sources de données et décrivant la structure de données de chaque source de données,
- des moyens de programme pour réaliser les étapes de :
a) entrer une requête pour obtenir des données de premier attribut pour au moins un premier attribut de l'ensemble d'attributs de l'un des types d'entité,
b) déterminer à partir des données de personnalisation, si une source de données unique pour les données de premier attribut de l'un des types d'entité est disponible,
c) si une telle source de données unique n'est pas disponible, déterminer au moins des première et seconde sources parmi les sources de données internes et externes qui, combinées, comprennent les données de premier attribut de l'un des types d'entité,
d) générer une sous-requête pour chacune des au moins première et seconde sources parmi les sources de données internes et externes, dans lequel la sous-requête est générée en utilisant la table de description de source de données, moyennant quoi les première et seconde sources de données sont des tables de bases de données, des fichiers XML, des services web, des appels de méthodes ou de fonctions, des documents EDI, ou des objets SOAP, ce par quoi une première des sous-requêtes est générée pour obtenir des premières données tabulaires du premier attribut à partir de la première des sources de données internes et externes et une seconde des sous-requêtes est générée pour obtenir des secondes données tabulaires d'un second attribut à partir de la seconde des sources de données internes et externes, le second attribut étant l'un de l'ensemble d'attributs du type d'entité,
e) combiner les résultats des sous-requêtes pour fournir un résultat de requête.

6. Produit de programme informatique selon la revendication 5, l'une des structures de données étant des données tabulaires liant des données de type d'entité à des données d'attribut d'attributs de l'ensemble d'attributs du type d'entité ou liant des données de second attribut d'un second attribut de l'ensemble d'attributs aux données de premier attribut.
